# EUROPÄISCHE PATENTANMELDUNG

(11) **EP 2 653 952 A2**
(43) Veröffentlichungstag der Anmeldung: **23.10.2013**
(21) Anmeldenummer: 13160085.0
(22) Anmeldetag: 20.03.2013
(51) Int. Cl.: G06F 1/32

(54) **Mikrocontroller**

(30) Priorität: 18.04.2012 DE 102012206340
(71) Anmelder: ROBERT BOSCH GMBH, 70442 Stuttgart (DE)
(72) Erfinder: Wenger, Christoph, 70825 Korntal-Muenchingen (DE)

(57) **Zusammenfassung**

Die Erfindung betrifft einen Mikrocontroller (1) für ein Fahrzeug mit zumindest einer Recheneinheit (10), einem Oszillator (20) zur Erzeugung eines ersten Taktsignals (TF₁) mit einer ersten Taktfrequenz, einem Frequenzvervielfacher (30), welcher aus dem ersten Taktsignal (TF₁) ein zweites Taktsignal (TF₂) mit einer zweiten Taktfrequenz erzeugt, und einer Umschalteinheit (40), welche die Recheneinheit (10) mit dem ersten Taktsignal (TF₁) oder dem zweiten Taktsignal (TF₂) verbindet. Erfindungsgemäß ist in einem aktiven Betriebsmodus die Recheneinheit (10) und mindestens eine weitere Baugruppe (10.2, 10.3) mit dem ersten Taktsignal (TF₁) verbunden. Des Weiteren ist eine Umschaltfunktion (42) vorgesehen, welche in Abhängigkeit von mindestens einem vorgegebenen Kriterium zumindest die Recheneinheit (10) über die Umschalteinheit (40) mit dem zweiten Taktsignal (TF₂) verbindet, dessen zweite Taktfrequenz höher als die erste Taktfrequenz des ersten Taktsignals (TF₁) ist.

## Beschreibung

### Stand der Technik

Die Erfindung geht aus von einem Mikrocontroller für ein Fahrzeug nach der Gattung des unabhängigen Patentanspruchs 1.

Üblicherweise werden zum Betrieb von Steuergeräten in Fahrzeugen Mikrocontroller (µC) eingesetzt. Diese Mikrocontroller verbrauchen in Abhängigkeit der Taktfrequenz und/oder der Peripherie und/oder der erforderlichen Rechenleistung einen bestimmten Strom. Typische Werte für den konstanten Strom liegen hierbei zwischen 50 mA und 500 mA. Dieser Betriebsstrom liegt deutlich über dem Stromverbrauch, welcher in der Ruhephase des Fahrzeugs zulässig ist. Daher weisen Mikrocontroller während der Ruhephase des Fahrzeugs einen Ruhemodus auf. Um einen stromsparenden Betrieb im Ruhemodus des Mikrocontrollers umzusetzen, wird die Taktfrequenz des Mikrocontrollers und somit der Stromverbrauch des Mikrocontrollers soweit wie möglich reduziert. Der Stromverbrauch im Ruhemodus liegt im Bereich von ca. 10 pA. Allerdings hat der Mikrocontroller im Ruhemodus auch nahezu keine Funktion mehr und benötigt eine bestimmte Zeitspanne zum Aufwachen und um die volle Funktionsfähigkeit zu erreichen.

Aus der Unterhaltungselektronik, insbesondere bei batteriebetriebenen Geräten, ist es bekannt, dass je nach Betriebszustand verschiedene Peripherieeinheiten zu- oder abgeschaltet werden können.

In der Offenlegungsschrift DE 196 10 627 A1 wird beispielsweise ein Mikrocontroller, insbesondere zur Verwendung in elektrischen Verstellantrieben in einem Fahrzeug, mit einer Selbstweckvorrichtung beschrieben. Der beschriebene Mikrocontroller weist eine Steuervorrichtung zur Vorgabe eines aktiven und eines inaktiven Betriebszustands bzw. zur Vorgabe eines Betriebsmodus und eines Ruhemodus auf. Im Mikrocontroller ist eine Schaltung, vorzugweise ein abschaltbarer Phasenregelkreis vorgesehen, welche aus der niedrigen Frequenz des Oszillators eine wesentlich höhere Taktfrequenz für den Mikrokontrollkern generiert, welche im Betriebsmodus verwendet wird. Im Ruhemodus oder im inaktiven Betriebszustand wird der Phasenregelkreis abgeschaltet. Um Versorgungsenergie einzusparen, umfasst der Mikrocontroller einen Oszillator zur Abgabe eines Aufwecksignals bzw. einer Taktfrequenz sowie eine Unterspannungserkennung, deren Ausganssignal unmittelbar dem Mikrocontrollerkern zuführbar ist. Die Unterspannungsbedingungen werden unmittelbar angezeigt. Über eine Zeitschaltlogik, welche eine Ruhezeit des Mikrocontrollerkerns überwacht, wird über eine Wachschaltung des Mikrocontrollers aktiviert wenn die zusätzliche Energie benötigt wird.

In der Patentschrift DE 10 2004 059 996 B4 wird eine Vorrichtung und ein Verfahren zum Einstellen einer Taktfrequenz eines Prozessors und/oder eines Mikrocontrollers beschrieben, wobei bei dem beschriebenen Verfahren ein Prozessorauslastungswert ermittelt wird. Der Prozessorauslastungswert ist ein Maß für durch den Prozessor und/oder Mikrocontroller ausgeführte Instruktionen in einer bestimmten Zeiteinheit. Des Weiteren wird eine Taktfrequenz eines Taktsignals des Prozessors und/oder eines Mikrocontrollers abhängig von dem ermittelten Prozessorauslastungswert bestimmt. Die durch den Prozessor und/oder den Mikrocontroller verarbeiteten Daten werden in einem Pufferspeicher zwischengespeichert und die Taktfrequenz wird abhängig von dem Füllstand des Pufferspeichers angepasst. Bei dem Verfahren und bei der Vorrichtung zum Einstellen der Taktfrequenz eines Prozessors und/oder eines Mikrocontrollers wird eine geringere Energieaufnahme des Prozessors und/oder des Mikrocontrollers ermöglicht, wobei gleichzeitig eine hohe Zuverlässigkeit bei der Bearbeitung der durch den Prozessor und/oder den Mikrocontroller durchgeführten Aufgaben gewährleistet wird. Die Reduzierung der Energieaufnahme wird dadurch erzielt, dass der tatsächlich benötigte Energiebedarf des Prozessors und/oder des Mikrocontrollers unter einem so genannten "worst case" Energiebedarf liegt. Da die Taktfrequenz und somit die aufgewendete Energie an die aktuell benötige Rechenleistung angepasst wird, kann auf diese Weise Energie eingespart werden. Die Vorrichtung zur Einstellung der Taktfrequenz weist unter anderem, eine Taktsignalquelle auf, welche ein Taktsignal erzeugt dessen Taktfrequenz einstellbar ist.

### Offenbarung der Erfindung

Der erfindungsgemäße Mikrocontroller für ein Fahrzeug mit den Merkmalen des unabhängigen Patentanspruchs 1 hat demgegenüber den Vorteil, dass in einem aktiven Betriebsmodus eine Recheneinheit des Mikrocontrollers und mindestens eine weitere Baugruppe des Mikrocontrollers mit einem ersten Taktsignal verbunden sind, wobei eine Umschaltfunktion vorgesehen ist, welche in Abhängigkeit von mindestens einem vorgegebenen Kriterium zumindest die Recheneinheit über eine Umschalteinheit mit einem zweiten Taktsignal verbindet. Die Taktfrequenz des zweiten Taktsignals ist hierbei höher als die erste Taktfrequenz des ersten Taktsignals. Dadurch kann in vorteilhafter Weise Energie gespart werden, da nur die Baugruppen, wie beispielsweise die Recheneinheit mit dem zweiten Taktsignal mit der höheren Taktsignal versorgt werden, welche zur schnelleren Verarbeitung der Daten die erhöhte Taktfrequenz benötigen. Hierbei wird den anderen Baugruppen des Mikrocontrollers weiterhin das erste Taktsignal mit der niedrigeren ersten Taktfrequenz zugeführt. Durch die Umschaltfunktion und die Umschalteinheit kann in vorteilhafter Weise die volle Funktionalität des Mikrocontrollers im Betriebsmodus zur Verfügung gestellt werden, wobei die Leistung des Mikrocontrollers bei Bedarf durch das zweite Taktsignal mit der höheren Taktfrequenz erhöht werden kann. Das bedeutet, dass die zusätzliche Energie erst dann zugeführt wird, wenn sie wirklich gebraucht wird. Durch dieses Versorgungskonzept ergibt sich in vorteilhafter Weise je nach Ausführung des Mikrocontrollers eine Einsparung von einem bis zu mehreren Watt.

Ausführungsformen der vorliegenden Erfindung stellen einen Mikrocontroller für ein Fahrzeug zur Verfügung, welcher eine optimierte Stromaufnahme aufweist, ohne dabei die Rechengeschwindigkeit merklich zu reduzieren. Dazu wird genutzt, dass die Stromaufnahme in erster Näherung proportional zur Taktfrequenz des Taktsignals ist und, dass die Anforderung von der Rechenleistung nicht kontinuierlich ist. Vielmehr erfolgt die Anforderung an die Rechenleistung zum einen in einem festen Zeitraster und zum anderen ereignisgesteuert. Dabei ist der Normalfall, dass eine Zeitreserve vorhanden ist, in welcher weitere ereignisgesteuerte Aufgaben bearbeitet werden könnten.

Ausführungsformen des erfindungsgemäßen Mikrocontrollers umfassen zumindest eine Recheneinheit, einen Oszillator zur Erzeugung eines ersten Taktsignals mit einer ersten Taktfrequenz, einen Frequenzvervielfacher, welcher aus dem ersten Taktsignal ein zweites Taktsignal mit einer zweiten Taktfrequenz erzeugt, und eine Umschalteinheit, welche zumindest die Recheneinheit mit dem ersten Taktsignal oder dem zweiten Taktsignal verbindet. Erfindungsgemäß sind in einem aktiven Betriebsmodus die Recheneinheit des Mikrocontrollers und mindestens eine weitere Baugruppe des Mikrocontrollers mit dem ersten Taktsignal verbunden. Zudem ist eine Umschaltfunktion vorgesehen, welche in Abhängigkeit von mindestens einem vorgegebenen Kriterium zumindest die Recheneinheit über die Umschalteinheit mit dem zweiten Taktsignal verbindet. Die Taktfrequenz des zweiten Taktsignals ist hierbei höher als die erste Taktfrequenz des ersten Taktsignals. In vorteilhafter Weise wird nur dann auf die höhere Taktfrequenz umgeschaltet, wenn ein Bedarf für die höhere Rechenleistung besteht. Dadurch können die Taktfrequenz und damit auch der Stromverbrauch des Mikrocontrollers im Betriebsmodus reduziert werden.

Unter der erforderlichen Rechenleistung wird die Rechenleistung verstanden, welche erforderlich ist, um regelmäßige und/oder unregelmäßige Ereignisse zu verarbeiten. Die erforderliche Rechenleistung variiert in einem festen Zeitfenster und/oder ereignisgesteuert.

Die Taktfrequenz des Taktsignals und somit der Stromverbrauch wird in vorteilhafter Weise erhöht, sobald eine Rechenleistung erforderlich ist, welche die aktuelle Rechenleistung übersteigt, welche durch die aktuelle niedriger Taktfrequenz vorgegeben ist. Hierbei werden einzelne Baugruppen des Mikrocontrollers durch das erste Taktsignal mit der ersten Taktfrequenz versorgt, und andere Baugruppen des Mikrocontrollers, insbesondere die Recheneinheit, werden mit dem ersten Taktsignal mit der ersten Taktfrequenz oder mit dem zweiten Taktsignal mit der höheren zweiten Taktfrequenz versorgt. Hierbei wird die erhöhte Taktfrequenz nur dann zugeschaltet, wenn diese erforderlich ist, während die restlichen Bereiche des Mikrocontrollers stromsparend mit dem ersten Taktsignal versorgt werden.

Durch die in den abhängigen Ansprüchen aufgeführten Maßnahmen und Weiterbildungen sind vorteilhafte Verbesserungen des im unabhängigen Patentanspruch 1 angegebenen Mikrocontrollers für ein Fahrzeug möglich.

Besonders vorteilhaft ist, dass das mindestens eine vorgegebene Kriterium eine zeitliche Bedingung oder ein Ereignis sein kann. In vorteilhafter Weise kann bei einem Programmabruf auf das höhere Taktsignal zugegriffen, welcher von der Recheneinheit bearbeitet wird. Hierbei kann die zeitliche Bedingung in vorteilhafter Weise periodisch und/oder in vorgegebenen Abständen auftreten. Hierbei kann ein auf einer zeitlichen Bedingung beruhender Programmabruf eine Systemüberprüfung und/oder ein Datenabgleich und/oder eine Datensicherung sein. Da diese Programmabrufe vorhersehbar und/oder berechenbar sind, kann in vorteilhafter Weise das Umschalten auf das zweite Taktsignal mit der höheren zweiten Taktfrequenz leicht berücksichtigt werden, indem eine korrespondierende Timing-Baugruppe ein entsprechendes Signal nach Ablauf der vorgesehen Zeitspanne oder periodisch ausgibt.

Das Ereignis kann beispielsweise ein Empfang eines Interrupt-Signals sein, welcher eine Abarbeitung einer Interrupt-Routine durch die Recheneinheit bewirkt. Ein Programmabruf aufgrund eines einzelnen Ereignisses, welches nicht vorhersehbar und/oder berechenbar eintritt, kann in vorteilhafter Weise schnell durch das Umschalten auf das zweite Taktsignal abgearbeitet werden, ohne dass sich die Rechenleistung des Mikrocontrollers merklich verlangsamt.

In vorteilhafter Ausgestaltung des erfindungsgemäßen Mikrocontrollers kann die Umschaltfunktion die mit dem zweiten Taktsignal verbundenen Baugruppen über die Umschalteinheit wieder mit dem ersten Taktsignal verbinden, wenn mindestens ein vorgegebenes Rückkehrkriterium erfüllt ist. Das vorgegebene Rückkehrkriterium kann beispielsweise ein Zustand sein, welcher die Beendigung eines Programmablaufs und/oder einer Interrupt-Routine anzeigt. Somit wird in vorteilhafter Weise sichergestellt, dass die Baugruppen nicht länger als nötig mit dem zweiten Taktsignal mit der höheren zweiten Taktfrequenz verbunden sind.

In weiterer vorteilhafter Ausgestaltung des erfindungsgemäßen Mikrocontrollers kann der Mikrocontroller einen Sparmodus umfassen. Im Sparmodus kann mindestens eine Baugruppe mit einem dritten Taktsignal verbunden werden, dessen dritte Taktfrequenz kleiner als die erste Taktfrequenz des ersten Taktsignals ist. Der Sparmodus kann insbesondere dann aktiviert werden, wenn sich das Fahrzeug in einem Ruhebetrieb befindet und der Mikrokontroller nahezu keine Aufgaben erfüllen muss. Hierbei kann das dritte Taktsignal beispielsweise durch einen zweiten Frequenzvervielfacher erzeugt werden, welcher die vom Oszillator erzeugte erste Taktfrequenz durch einen Faktor reduziert, welcher kleiner als eins ist. Dadurch kann in vorteilhafter Weise weitere Energie eingespart werden.

In weiterer vorteilhafter Ausgestaltung des erfindungsgemäßen Mikrocontrollers kann der Mikrocontroller mindestens eine Schnittstelleneinheit umfassen, welche für die Umschaltfunktion relevante Daten empfängt. In vorteilhafter Weise können somit Signale und Parameter von Baugruppen empfangen werden, welche außerhalb des Mikrocontrollers angeordnet sind. Auf diese Weise können weitere Kriterien bzw. Bedingungen für die Umschaltfunktion festgelegt werden. Des Weiteren können mehrere Schnittstelleneinheiten vorgesehen werden, wobei die Verarbeitung der ankommenden Signale unterschiedliche Prioritäten bei der Verarbeitung zugewiesen werden können. Die Schnittstelleneinheit kann beispielsweise als CAN-Controller ausgeführt sein, welche mit dem ersten Taktsignal mit der ersten Taktfrequenz verbunden ist.

In weiterer vorteilhafter Ausgestaltung des erfindungsgemäßen Mikrocontrollers kann der Frequenzvervielfacher als Phasenregelkreis (PLL) ausgeführt werden, welcher die erste Frequenz um einen vorgegebenen Faktor erhöht oder verringert. Ein Phasenregelkreis kann in vorteilhafter Weise leicht implementiert werden und ermöglicht eine kostengünstige und zuverlässige Frequenzvervielfachung.

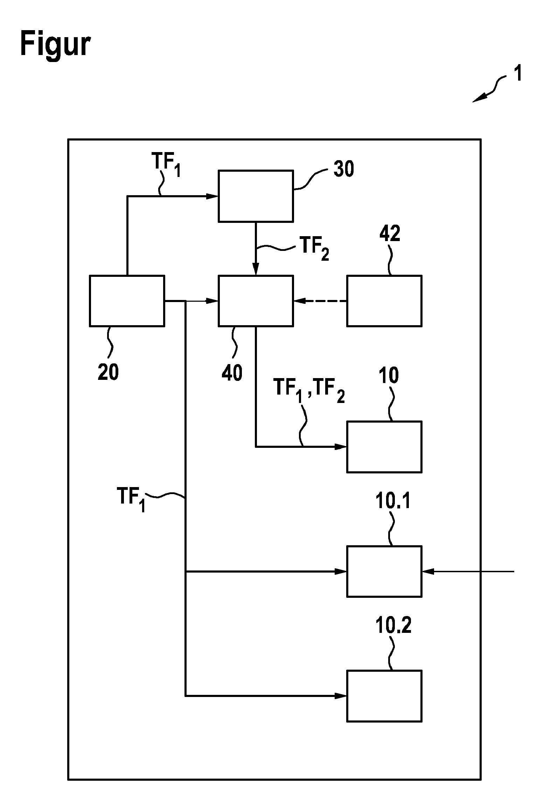

Ein Ausführungsbeispiel der Erfindung ist in der Zeichnung dargestellt und wird in der nachfolgenden Beschreibung näher erläutert. In der Zeichnung bezeichnen gleiche Bezugszeichen Komponenten bzw. Elemente, die gleiche bzw. analoge Funktionen ausführen.

### Kurze Beschreibung der Zeichnung

Die einzige Figur zeigt ein schematisches Blockschaltbild eines Ausführungsbeispiels eines erfindungsgemäßen Mikrocontrollers.

### Ausführungsform der Erfindung

Wie aus der einzigen Figur ersichtlich ist, umfasst der Mikrocontroller 1 für ein Fahrzeug zumindest eine Recheneinheit 10, einen Oszillator 20 zur Erzeugung eines ersten Taktsignals TF₁ mit einer ersten Taktfrequenz, einen Frequenzvervielfacher 30, welcher aus dem ersten Taktsignal TF₁ ein zweites Taktsignal TF₂ mit einer zweiten Taktfrequenz erzeugt, und eine Umschalteinheit 40, welche die Recheneinheit 10 mit dem ersten Taktsignal TF₁ oder dem zweiten Taktsignal TF₂ verbindet. Hierbei ist der Mikrocontroller 1 vorzugsweise als Halbleiterchip ausgeführt. Ausführungsformen des erfindungsgemäßen Mikrocontrollers 1 können beispielsweise in Fahrzeugsteuergeräten, wie beispielsweise einem ABS-Steuergerät und/oder einem Airbagsteuergerät und/oder einem Motorsteuergerät und/oder einem Kombiinstrumentensteuergerät und/oder einem ESP-Steuergerät und/oder als Teil der Bodyelektronik, insbesondere als Bodycomputer eingesetzt werden.

Erfindungsgemäß sind in einem aktiven Betriebsmodus die Recheneinheit 10 und mindestens eine weitere Baugruppe 10.1, 10.2 mit dem ersten Taktsignal TF₁ verbunden, wobei eine Umschaltfunktion 42 vorgesehen ist, welche in Abhängigkeit von mindestens einem vorgegebenen Kriterium zumindest die Recheneinheit 10 über die Umschalteinheit 40 mit dem zweiten Taktsignal TF₂ verbindet, dessen zweite Taktfrequenz höher ist als die erste Taktfrequenz des ersten Taktsignals TF₁.

Wie aus der einzigen Figur weiter ersichtlich ist, erfolgt die Taktgenerierung durch einen Quarzoszillator 20. Im dargestellten Ausführungsbeispiel beträgt die erste Taktfrequenz des ersten Taktsignals TF₁ ca. 8 MHz und entspricht der Grundfrequenz des Oszillators 20. Die Baugruppen 10.1, 10.2, der Frequenzvervielfacher 30 und die Umschalteinheit 40 sind direkt mit dem Oszillator 20 verbunden.

Eine nicht dargestellte Ausführungsform kann auch vorsehen, dass das vom Oszillator 20 generierte erste Taktsignal TF₁ erst verarbeitet und/oder modifiziert wird, bevor es mit den Baugruppen 10.1, 10.2 und/oder dem Frequenzvervielfacher 30 und/oder der Umschalteinheit 40 verbunden wird.

Wie aus der einzigen Figur weiter ersichtlich ist, wird die nachgeschaltete Frequenzvervielfachung im dargestellten Ausführungsbeispiel über einen Phasenregelkreis 30 erzeugt, welcher die erste Frequenz um einen Faktor acht erhöht. Somit weist das zweite Taktsignal TF₂ eine zweite Taktfrequenz von ca. 64 MHz auf. Selbstverständlich kann der Frequenzvervielfacher 30 in anderen nicht dargestellten Ausführungsbeispielen die erste Taktfrequenz des ersten Taktsignals TF₁ um einen anderen Faktor als acht erhöhen oder verringern.

Wie aus der einzigen Figur weiter ersichtlich ist, sind die Baugruppen, welche mit dem ersten Taktsignal versorgt werden, beispielsweise ein Schnittstelleneinheit 10.1 und/oder ein CAN-Controller und/oder eine Timing-Baugruppe 10.2. Weitere nicht dargestellte Baugruppen können als LIN- (Local Interconnect Network), USB- (Universal Serial Bus), I²C- (Inter-Integrated Circuit) und/oder SPI- (Serial Peripheral Interface) Schnittstelleneinheit ausgeführt werden. Zudem können eine serielle Schnittstelleneinheit oder eine Ethernet-Schnittstelleneinheit, ein Pulsweitenmodulationseinheit, ein LCD-Controller, ein LCD-Treiber oder/oder ein Analog-Digital-Wandler vorgesehen werden.

Wie aus der einzigen Figur weiter ersichtlich ist, empfängt die mindestens eine Schnittstelleneinheit 10.1 für die Umschaltfunktion 42 relevante Daten, wobei im dargestellten Ausführungsbeispiel nur eine Schnittstelleneinheit 10.1 vorhanden sind. Selbstverständlich können aber auch mehrere Schnittstelleneinheiten im Mikrokontroller vorgesehen werden.

Das vorgegebene Kriterium aufgrund dessen zumindest die Recheneinheit 10 über die Umschalteinheit 40 mit dem zweiten Taktsignal TF₂ verbunden wird, ist eine zeitliche Bedingung oder ein Ereignis. Hierbei kann die zeitliche Bedingung beispielsweise periodisch und/oder in vorgegebenen Abständen auftreten. Das Ereignis kann beispielsweise ein Empfang eines Interrupt-Signals sein. Das Zutreffen der zeitlichen Bedingung wird im dargestellten Ausführungsbeispiel über die intergierte Timing-Baugruppe 10.2 überwacht.

Wie aus der einzigen Figur weiter ersichtlich ist, wird die Recheneinheit 10 im Betriebsmodus mit dem ersten Taktsignal TF₁ versorgt. Wenn ein vorgegebenes Kriterium erfüllt ist, wird über die Umschalteinheit 40 die Versorgung der Recheneinheit 10 mit dem zweiten Taktsignal TF₂ mit der zweiten höheren Taktfrequenz realisiert. Weitere Baugruppen welche ebenfalls bei Bedarf von dem zweiten Taktsignal TF₂ versorgt werden können, sind beispielsweise nicht dargestellte programmierbare digitale und/oder analoge Funktionsblöcke.

Wenn ein vorgegebenes Rückkehrkriterium erfüllt ist, verbindet die Umschaltfunktion 42 die mit dem zweiten Taktsignal TF₂ verbundene Recheneinheit 10 über die Umschalteinheit 40 wieder mit dem ersten Taktsignal TF₁. Im dargestellten Ausführungsbeispiel ist die Umschalteinheit 4ß nur mit der Recheneinheit verbunden 10, so dass nur die Recheneinheit 10 mit zwei verschiedenen Taktsignale TF₁, TF₂ versorgt werden kann.

Des Weiteren umfasst der Mikrocontroller 1 bei nicht dargestellten Ausführungsbeispielen zusätzlich einen Sparmodus, in welchem mindestens eine Baugruppe 10, 10.1, 10.2 des Mikrocontrollers 1 mit einem dritten Taktsignal verbindbar ist, dessen dritte Taktfrequenz kleiner als die erste Taktfrequenz des ersten Taktsignals TF₁ ist. Das dritte Taktsignal kann beispielsweise durch einen zweiten Oszillator oder durch einen zweiten Frequenzvervielfacher erzeugt werden, welcher die vom Oszillator erzeugte erste Taktfrequenz durch einen Faktor reduziert, welcher kleiner als eins ist. Der Sparmodus kann insbesondere dann aktiviert werden, wenn sich das Fahrzeug in einem Ruhebetrieb befindet und der Mikrokontroller 1 nahezu keine Aufgaben erfüllen muss. Vorzugsweise werden im Sparmodus alle Baugruppen 10, 10.1, 10.2 des Mikrocontrollers 1 mit dem dritten Taktsignal versorgt, um den Energieverbrauch auf ein Minimum zu reduzieren.

## Patentansprüche

1. Mikrocontroller für ein Fahrzeug, welcher zumindest eine Recheneinheit (10), einen Oszillator (20) zur Erzeugung eines ersten Taktsignals (TF₁) mit einer ersten Taktfrequenz, einen Frequenzvervielfacher (30), welcher aus dem ersten Taktsignal (TF₁) ein zweites Taktsignal (TF₂) mit einer zweiten Taktfrequenz erzeugt, und eine Umschalteinheit (40) umfasst, welche die Recheneinheit (10) mit dem ersten Taktsignal (TF₁) oder dem zweiten Taktsignal (TF₂) verbindet, **dadurch gekennzeichnet, dass** in einem aktiven Betriebsmodus die Recheneinheit (10) und mindestens eine weitere Baugruppe (10.2, 10.3) mit dem ersten Taktsignal (TF₁) verbunden sind, wobei eine Umschaltfunktion (42) vorgesehen ist, welche in Abhängigkeit von mindestens einem vorgegebenen Kriterium zumindest die Recheneinheit (10) über die Umschalteinheit (40) mit dem zweiten Taktsignal (TF₂) verbindet, dessen zweite Taktfrequenz höher als die erste Taktfrequenz des ersten Taktsignals (TF₁) ist.

2. Mikrocontroller nach Anspruch 1, **dadurch gekennzeichnet, dass** das mindestens eine vorgegebene Kriterium eine zeitliche Bedingung oder ein Ereignis ist.

3. Mikrocontroller nach Anspruch 2, **dadurch gekennzeichnet, dass** die zeitliche Bedingung periodisch und/oder in vorgegebenen Abständen auftritt.

4. Mikrocontroller nach Anspruch 2, **dadurch gekennzeichnet, dass** das Ereignis ein Empfang eines Interrupt-Signals ist.

5. Mikrocontroller nach einem der Ansprüche 1 bis 4, **dadurch gekennzeichnet, dass** die Umschaltfunktion (42) die mit dem zweiten Taktsignal (TF₂) verbundenen Baugruppen (10) über die Umschalteinheit (40) wieder mit dem ersten Taktsignal (TF₁) verbindet, wenn mindestens ein vorgegebenes Rückkehrkriterium erfüllt ist.

6. Mikrocontroller nach einem der Ansprüche 1 bis 5 **dadurch gekennzeichnet, dass** der Mikrocontroller (1) einen Sparmodus umfasst, wobei im Sparmodus mindestens eine Baugruppe (10, 10.2, 10.3) mit einem dritten Taktsignal verbindbar ist, dessen dritte Taktfrequenz kleiner als die erste Taktfrequenz des ersten Taktsignals (TF₁) ist.

7. Mikrocontroller nach einem der Ansprüche 1 bis 6 **dadurch gekennzeichnet, dass** der Mikrocontroller (1) mindestens eine Schnittstelleneinheit (10.2) umfasst, welche für die Umschaltfunktion (42) relevante Daten empfängt.

8. Mikrocontroller nach einem der Ansprüche 1 bis 7, **dadurch gekennzeichnet, dass** der Frequenzvervielfacher (30) als Phasenregelkreis (PLL) ausgeführt ist, welcher die erste Frequenz des ersten Taktsignals (TF₁) um einen vorgegebenen Faktor erhöht oder verringert.
